Europäisches Patentamt

(19) European Patent Office

Office européen des brevets

(11) Publication number: **0 055 491**

**B1**

(12) **EUROPEAN PATENT SPECIFICATION**

(45) Date of publication of patent specification: **14.11.84**

(21) Application number: **81110830.7**

(22) Date of filing: **29.12.81**

(51) Int. Cl.³: **G 02 B 7/00**

(54) Balancing system for laser machining device.

(30) Priority: **29.12.80 JP 187576/80**

(43) Date of publication of application:
**07.07.82 Bulletin 82/27**

(45) Publication of the grant of the patent:
**14.11.84 Bulletin 84/46**

(84) Designated Contracting States:
**DE FR GB SE**

(56) References cited:
**GB-A- 764 971**
**GB-A-2 056 109**
**GB-A-2 074 337**
**US-A-3 658 406**
**US-A-4 235 405**

(73) Proprietor: **SUMITOMO ELECTRIC INDUSTRIES LIMITED**
**No. 15, Kitahama 5-chome Higashi-ku**
**Osaka-shi Osaka-fu (JP)**

(72) Inventor: **Yoshida, Kenichi**
**Osaka Works of Sumitomo Electric Ind., Ltd.**
**1-3, Shimaya 1-chome Konohana-ku Osaka (JP)**
Inventor: **Ono, Kimizo**
**Osaka Works of Sumitomo Electric Ind., Ltd.**
**1-3, Shimaya 1-chome Konohana-ku Osaka (JP)**
Inventor: **Sunago, Katsuyoshi**
**Osaka Works of Sumitomo Electric Ind., Ltd.**
**1-3, Shimaya 1-chome Konohana-ku Osaka (JP)**
Inventor: **Iwamoto, Tomio**
**Osaka Works of Sumitomo Electric Ind., Ltd.**
**1-3, Shimaya 1-chome Konohana-ku Osaka (JP)**
Inventor: **Takenaka, Shinya**
*Osaka Works of Sumitomo Electric Ind., Ltd.*
**1-3, Shimaya 1-chome Konohana-ku Osaka (JP)**

(74) Representative: **Patentanwälte Henkel,**
**Pfenning, Feiler, Hänzel & Meinig**
**Möhlstrasse 37**
**D-8000 München 80 (DE)**

## Description

The invention relates to a balancing system for a laser machining device having light conducting pipes and a balance mechanism including a balance supporting member.

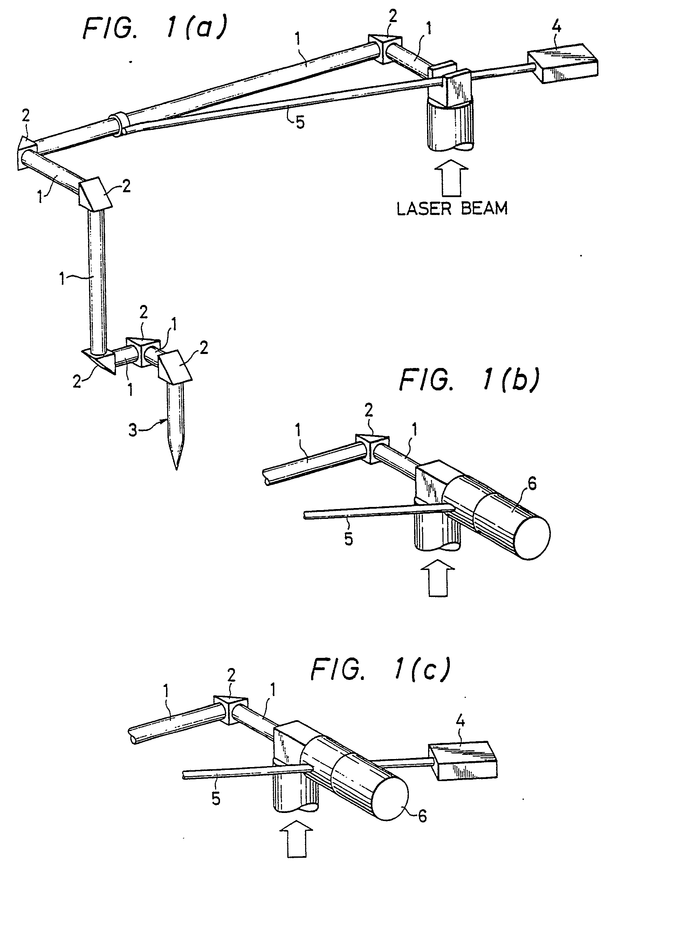

Fig. 1(a) shows one example of a conventional laser machining device, with different balancing mechanisms being shown in Figs. 1(a) to 1(c). In these Figures, reference numeral 1 designates a light conducting pipe; 2, articulation joints; 3, a hand piece; 4, a balance weight; 5, a balance supporting rod; and 6, a spring balance mechanism. A laser beam from a laser source (not shown) is applied to a light conducting path, for instance, of a multi-articulation mirror reflection type, as indicated by the arrow in Fig. 1 and is propagated in the light conducting pipes 1. During the propagation, the laser beam is repeatedly reflected by mirrors provided in the articulation joints 2, and propagated to the hand piece 3 to irradiate a workpiece (not shown). Heretofore, in order to balance the weight of the multi-articulation mirror reflection type light conducting path, a weight balance system has been employed in which, as shown in Fig. 1(a), the weight of the light conducting path is balanced by a balance weight which is provided on the opposite side of the stationary fulcrum of the light conducting pipe 1. Alternatively, a spring balance system has been employed in which, as shown in Fig. 1(b), the weight is balanced by the repulsive force of a spring balance mechanism 6. Sometimes the weight and spring balance systems are combined, as shown in Fig. 1(c).

The weight balance system is disadvantageous in that, since the weight of the light conducting path is balanced with the weight only, the weight must be considerably heavy, and accordingly the total weight is large and the inertial moment is considerably large. The spring balance system is also disadvantageous in that a large force is exerted on the spring which balances the weight of the system. It is necessary to loosen the spring in order to perform fine adjustment, and due to the large force of the spring it is rather difficult to adjust the balance finely. In the combined weight and spring balance system the weight is displaced for fine balance adjustment, and the fine adjustment range is increased by increasing the weight of the balancing weight or by increasing the length of the weight supporting rod. Therefore, the weight and spring balance system as shown in Fig. 1(c) suffers from the drawback that the balance mechanism becomes bulky when the fine adjustment range is increased.

It is, therefore, an object of the present invention to provide a balancing system which is small in weight, simple in finely balance adjustment and excellent in operability.

To achieve this object, the balancing system for a laser machining device having light conducting pipes and a balance mechanism including a balance supporting member is characterized in that a weight is slidably mounted on either the second horizontal light conducting pipe counted from the fulcrum or the balance supporting member, one end of the balance supporting member being attached to the second horizontal light conducting pipe.

Preferably, the present invention employs a spring balance mechanism in combination with a sliding weight on either a supporting rod or on the second light conducting pipe itself. Main balancing is performed by the spring balance mechanism, while fine balance adjustment can be performed by adjusting the small sliding weight along the supporting rod or light conducting pipe.

This invention will be described with reference to the accompanying drawings, in which:

Figs. 1(a) to 1(c) are explanatory diagrams showing examples of conventional laser machining device balancing mechanism;

Fig. 2 is an explanatory diagram showing one example of a balancing system for a laser machining device according to this invention; and

Fig. 3(a) and (b) are sectional views showing a fine adjustment weight employed in the balancing system of the invention.

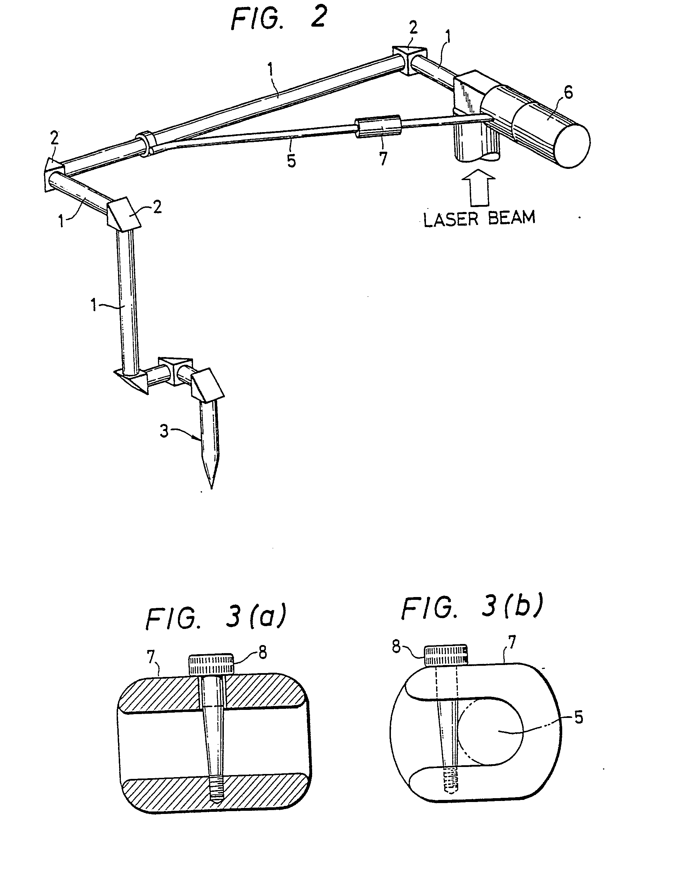

Fig. 2 shows one example of a balancing system at a laser machining device according to this invention. In Fig. 2, those components which have been described with reference to Figs. 1(a) to 1(c) are therefore similarly numbered. In Fig. 2, reference numeral 7 designates a weight for fine adjustment. In a balance system employed in the laser machining device according to this invention, the weight of the light conducting path is balanced mainly with the spring balance mechanism 6, and the fine adjustment of balance is carried out by the fine adjustment weight 7 which is slidably mounted on the balance supporting rod 5 or on the second horizontal light conducting pipe 1 counted from the fulcrum. The weight 7 is slidable substantially over the entire length of the balance supporting rod 5 or the horizontal light conducting pipe 1, and it is fixed with a bolt, set screw, or the like at a position where proper balance is obtained.

Since the main balance is obtained by the spring balance system and the fine adjustment is carried out by the sliding weight balance system the invention is advantageous in at least the following respects. First, since the balance is obtained mainly by the spring balance system, the required weight of the sliding weight 7 is small. Consequently, the inertial moment during operation is small, the ease of operability is thus increased and the total weight is small, when compared with the device as shown in Fig. 1(a). Further, the fine adjustment can be achieved merely by sliding the fine adjustment weight 7. The fine adjustment mechanism, employing only the sliding weight, is not only simple to operate but is also simple in construction. Still further, since the fine adjustment weight is mounted on the long balance supporting rod 5 or horizontal light conducting pipe 1, a wide fine adjustment range can be obtained by a light weight.

Figs. 3(a) and 3(b) are sectional views of the fine adjustment weight in the balancing system according to the invention. In these Figures, reference numerals 5, 7 and 8 designate the aforementioned balance supporting rod, fine adjustment weight and a bolt, respectively. The bolt 9 is tapered, and its end portion is threaded. The fine adjustment weight 7 is secured to the balance supporting rod 5 by tightening the bolt 8. After the bolt 8 has been loosened or unscrewed, the fine adjustment weight 7 can be slid along the rod 5 or the horizontal light conducting pipe until the proper balance is obtained, and then the fine adjustment weight 7 is secured by tightening the bolt 8, thereby achieving a fine balance adjustment. The fine adjustment weight 7 can be readily removed from or mounted on the balance supporting rod 5 or the horizontal light conducting pipe 1 by removing the bolt 8 entirely therefrom. Therefore, the number of weights, or the size of a single weight can be readily changed, which contributes to an increase in the fine balance adjustment range.

The balancing system for the laser machining device according to the invention is applicable to laser knives and to various other kinds of laser machining device.

## Claims

1. Balancing system for a laser machining device having light conducting pipes and a balance mechanism including a balance supporting member, characterized in that a weight (7) is slidably mounted on either the second horizontal light conducting pipe (1) counted from the fulcrum, or on the balance supporting member (5), one end of the balance supporting member (5) being attached to said second horizontal light conducting pipe (1).

2. Balancing system according to claim 1, characterized in that said supporting member is a supporting rod (5), and said weight (7) is slidably mounted on said rod (5).

3. Balancing system according to claim 2, characterized in that said balance mechanism is a spring balance mechanism (6).

4. Balancing system according to claim 1, characterized in that said slidable weight (7) comprises a weight member having an opening for receiving said second horizontal light conducting pipe (1) or said supporting member (5), and a bolt (8) bridging said opening for securing said slidable weight (7).

## Revendications

1. Système d'équilibrage pour dispositif d'usinage par laser possédant des tubes de conduction de lumière et un mécanisme d'équilibrage comportant un élément de support d'équilibre, caractérisé en ce qu'un poids (7) est monté coulissant sur le deuxième tube de conduction de lumière horizontal (1) compté à partir du point d'appui ou sur l'élément de support d'équilibre (5), une extrémité de l'élément de support d'équilibre (5) étant fixée audit deuxième tube de conduction de lumière horizontal (1).

2. Système d'équilibrage selon la revendication 1, caractérisé en ce que ledit élément de support est une tige de support (5), et ledit poids (7) est monté coulissant sur ladite tige (5).

3. Système d'équilibrage selon la revendication 2, caractérisé en ce que ledit mécanisme d'équilibrage est un mécanisme d'équilibrage par ressort (6).

4. Système d'équilibrage selon la revendication 1, caractérisé en ce que ledit poids (7) pouvant coulisser comprend un élément pesant possédant une ouverture destinée à recevoir ledit deuxième tube de conduction de lumière horizontal (1) ou ledit élément de support (5), et un boulon (8) enjambant ladite ouverture afin de fixer ledit poids (7) pouvant coulisser.

## Patentansprüche

1. Gewichtsausgleichanordnung für eine Laser-Bearbeitungsvorrichtung mit Lichtleiterröhren und einem ein Gewichtsausgleich-Tragelement aufweisenden Gewichtsausgleichmechanismus, dadurch gekennzeichnet, daß ein Gewicht (7) entweder auf der von Drehpunkt aus gesehen, zweiten waagerechten Lichtleiterröhre (1) oder auf dem Gewichtsausgleich-Tragelement (5) verschiebbar angeordnet ist, wobei das eine Ende des Gewichtsausgleich-Tragelements (5) an der genannten zweiten waagerrechten Lichtleiterröhre (1) angebracht ist.

2. Gewichtsausgleichanordnung nach Anspruch 1, dadurch gekennzeichnet, daß das Tragelement eine Tragstange (5) ist und das Gewicht (7) verschiebbar auf die Stande (5) aufgesetzt ist.

3. Gewichtsausgleichanordnung nach Anspruch 2, dadurch gekennzeichnet, daß der Gewichtsausgleichmechanismus ein Feder (gewichts) ausgleichmechanismus (6) ist.

4. Gewichtsausgleichanordnung nach Anspruch 1, dadurch gekennzeichnet, daß das verschiebbare Gewicht (7) ein Gewichtelement mit einer Öffnung zur Aufnahme der genannten zweiten Lichtleiterröhre (1) oder des Tragelements (5) und einen die Öffnung überspannenden Schraubbolzen (8) zur Festlegung des verschiebbaren Gewichts (7) aufweist.

FIG. 1(a)

LASER BEAM

FIG. 1(b)

FIG. 1(c)

0 055 491

FIG. 2

LASER BEAM

FIG. 3(a)

FIG. 3(b)

2